# EUROPEAN PATENT SPECIFICATION

(11) **EP 2 437 003 B1**
(45) Date of publication and mention of the grant of the patent: **24.07.2013**
(21) Application number: 10185749.8
(22) Date of filing: 01.10.2010
(51) Int. Cl.: F24J 2/46, F24J 2/51

(54) **Solar panel for glazing system**
Sonnenkollektorglasierungssystem
Panneau solaire pour système de vitrage

(43) Date of publication of application: 04.04.2012
(73) Proprietor: Sunstrip AB, 612 44 Finspång (SE)
(72) Inventor: Sundkvist, Robert, 269 36, Båstad (SE)
(74) Representative: Valea AB

(56) References cited:
- DE-A1- 10 106 776
- DE-B3- 10 239 371
- FR-A1- 2 427 558
- US-A- 4 538 592
- US-A- 4 597 378
- US-A- 5 894 837

## Description

### TECHNICAL FIELD

The present invention is related to a solar panel for glazing systems in accordance with the preamble of claim 1.

### BACKGROUND OF THE INVENTION

Solar collectors are used in order to capture solar energy. There are several different ways of capturing solar energy, using appropriate collector technology. Sunlight can be converted into electricity in solar cells or solar thermal insolation, i.e. solar radiation energy received on a given surface area in a given time, may be captured by a surface, raising its temperature, with the heat being transferred to a medium, which can be either a liquid or a gas.

The heated medium can then be used either directly, as for heating swimming pools, or indirectly via a heat exchanger. Thermal solar collectors can deliver heat for a wide range of applications, such as for heating domestic hot water and space heating. Another interesting application is to use thermal solar energy for producing cooling. Such a cooling application is particularly attractive as about 15-20 % of all world electricity is used for various types of cooling or heat pump systems, and because it is particularly in areas where insolation is high that cooling requirements are likely to be greatest.

A commonly used type of thermal solar collector is the so called flat plate solar collector. A flat plate solar collector usually consists of a thermally insulated case with a cover glass. The case contains an absorber, which absorbs the incident radiation, and which usually heats a fluid, such as e.g. a water/glycol mixture, circulated in contact with it. The cover glass and thermal insulation behind the absorber minimise heat losses to the surroundings. The heat may e.g. be transported in a closed circuit to a heat store, such as a domestic hot water tank or a hot water tank for space heating purposes, forming part of a solar energy system.

Flat plate solar collectors are usually made of a sheet metal box structure, often having an aluminium frame as a stabilizing portion. An insulation material is usually inserted into this box structure to reduce heat losses from the solar collector. However, a general feature of these designs is that they comprise a plurality of points at which the heat transmission to the ambient atmosphere is great, usually due to metallic connections between the absorber and the sheet metal box structure or aluminium frame. These so-called "thermal bridges" are then usually further promoted by the commonly used metallic structures applied for mounting groups of Flat plate solar collectors at rooftop positions of buildings. Another feature of the common designs is a great demand of labour and machinery in the production which reduces the production capacity and yields high production costs. Still another frequent problem of the common designs relates to outgassing from the insulation. Outgassing means that a binding agent from the insulation is emitted as gas when the insulation is heated. These gasses then accumulate as a film at the inside of the cover glass and at the absorber. This film has a negative effect on the efficiency of the solar collector.

A previously known solar collector is disclosed through US 4 538 592 A, which document shows a solar collector comprising a supporting panel, a transparent plate cover connected at its rim portion to the supporting panel, and an absorber element enclosed between the supporting panel and the plate cover. The supporting panel is compression moulded of a fibre material with a thermosetting binding agent and has a generally plain bottom portion and a rim portion extending at an angle to the bottom portion and made integral therewith.

### SUMMARY OF THE INVENTION

An object of the present invention is to provide an improved solar panel for glazing systems, through which the above discussed problems are eliminated or at least reduced.

According to a first aspect of the present invention this object is achieved in accordance with claim 1, which specifies a solar panel for glazing systems, which comprises: a self-supporting panel, compression moulded from at least one thermally insulating fibre material and a thermosetting binding agent to form an open-top box having highly a compressed rigid rim and less so compressed thermally insulating side walls and bottom; a radiation transparent front cover connected to the self-supporting panel at the rim sealingly enclosing the box; an in the enclosed box, between the radiation transparent front cover and the thermally insulating side walls and bottom, arranged absorber unit; and a metal foil covering the rim, inside walls and bottom of the box.

Further embodiments are listed in the dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:
Figure 1 is an exploded view of a first embodiment of a solar panel for glazing systems;
Figure 2 is a sectional view of an assembled solar panel according to figure 1 along line A—A;

Figure 3 illustrates the positioning of the metal foil through an enlarged detail of a left hand end section of the figure 2 view.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

The present invention is based on the realization that glazing systems are becoming ever more frequent parts of newly constructed or refurbished buildings. Such glazing systems are commonly standardized to receive glass panes of different sizes. As these structural glazing systems usually cover large sections of the building, such as facades and roofs, these structures will provide large areas exposed to insolation. Thus the present invention aims at providing a solar panel for glazing systems and especially one suited for mounting to commonly used standardized glazing systems.

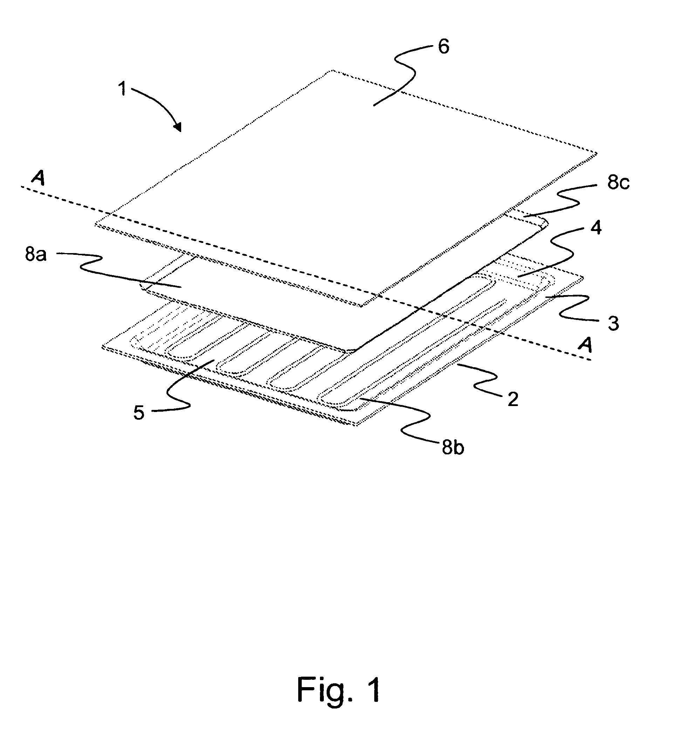

In a preferred first embodiment of the present invention, as shown schematically in figure 1, an exploded view of a solar panel 1 for glazing systems is illustrated. Use of the solar panel 1 in accordance with the present invention in glazing systems enables the provision of active facades for multifunction like heating, cooling, hot tap water and solar shading.

The solar panel 1 comprises a self-supporting panel 2, compression moulded from at least one thermally insulating fibre material and a thermosetting binding agent to form an open-top box 2. The open-top box 2 has a highly compressed rigid rim 3 and less so compressed thermally insulating side walls 4 and bottom 5. This self-supporting panel 2 being one integral unit allows for a reduction of the number of components required for the solar panel as well as a reduction of the time and effort required for assembly thereof, as compared to the prior art sheet metal box structures or aluminium frames.

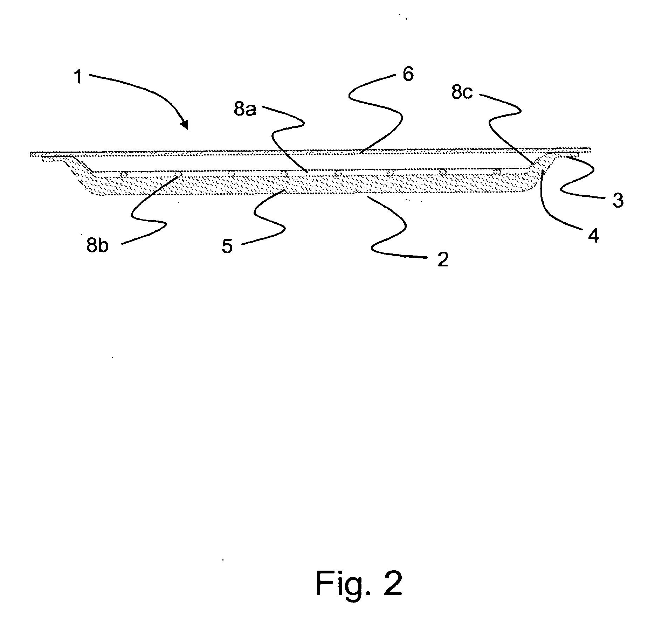

As shown in figure 2, a radiation transparent front cover 6 is connected to the self-supporting panel 2 at the rim 3, sealingly enclosing the box 2. The radiation transparent front cover 6 may be made from ordinary glass or tempered glass, single or double. Various types of single or double synthetic glass may also be used, since the self-supporting panel 2 is relatively elastic and therefore able to follow the movements of the radiation transparent front cover 6 without incurring tension thereto.

An absorber unit 8 is arranged within the enclosed box, between the radiation transparent front cover 6 and the thermally insulating side walls 4 and bottom 5. The absorber unit 8 comprises an absorber plate 8a of aluminium, with a metallically joined copper tube 8b for conveying the heat transfer liquid.

The absorber plate 8a has a slanting circumferential edging 8c. Such a slanting circumferential edging 8c provides for a substantially improved Incident Angle Modification (IAM) - effect. i.e. provides for a substantially improved energy absorption at low angles of inclination between the sun and the absorber plate 8a. This is especially useful if the solar panels 1 are wall mounted.

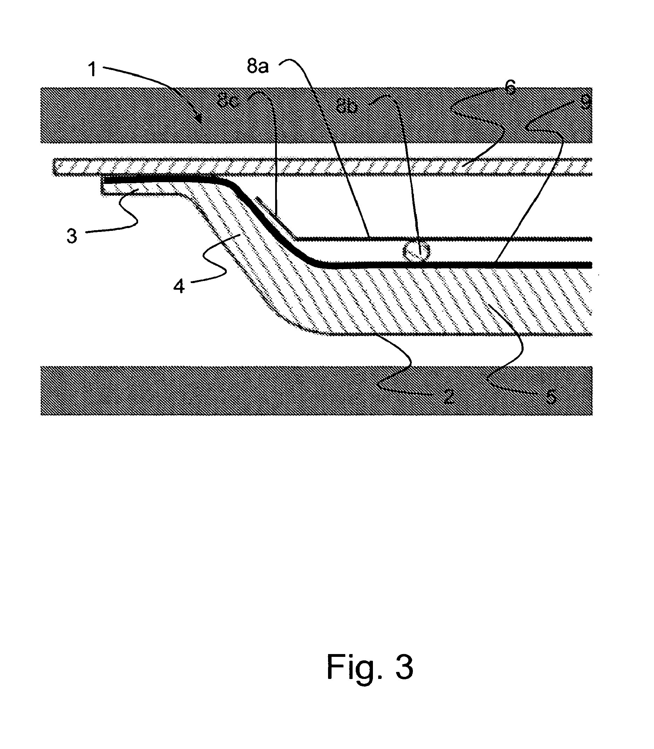

As illustrated in figure 3, a metal foil 9 is provided, covering the rim 3, inside of walls 4 and bottom 5 of the box 2. This metal foil 9 is suitably applied to the inside of walls 4 and bottom 5 of the box 2 in a pressing step subsequent to the step of compression moulding the self-supporting panel 2. The metal foil 9 provides a diffusion seal and a reflector.

The diffusion seal prevents outgassing from the insulation, which is a known problem occurring in solar panels. Outgassing means that the binding agent from the insulation is emitted as gas when the insulation is heated. These gasses then accumulate as a film at the inside of the radiation transparent front cover 6 and at the absorber unit 8. This film has a negative effect on the efficiency of the solar panel.

Further, the reflector provided by the metal foil 9 reflects radiated heat from the backside of the absorber unit, thus reducing heat losses.

The radiation transparent front cover 6 projects outwardly of the rim 3, in this way facilitating attachment of the solar panel 1 to a standard glazing system. This is possible as the solar panel 1 comprises the self-supporting panel 2 and no framing from sheet metal or extruded aluminium profiles. The edges of the radiation transparent front cover 6 may thus be clamped in a standard glazing system. Hereby the solar panel 1 may easily be sized to fit different glazing systems simply by altering the external dimensions of the radiation transparent front cover 6. The self-supporting panel 2 may be produced in a number of standardized sizes in order to keep production costs to a minimum whilst allowing for flexibility in solar panel 1 sizes.

As the solar panel 1 is attached only using the sections of the radiation transparent front cover 6 projecting outwardly of the rim 3 the absorber unit 8 will have no metallic connections to the mounting structures, thus thermal-bridges are eliminated and the efficiency of the solar panel 1 improved as compared to prior art solar panels.

For attachment, the radiation transparent front cover 6 is preferably glued to the self-supporting panel 2 at the rim 3 such that the box 2 is sealed essentially gas-tight. Hereby is enabled that the box 2 is filled with a gas having lower thermal conductivity than air. Such a gas filling provides for reduced heat losses through the radiation transparent front cover 6 and thus a further improved efficiency of the solar panel 1. Although this kind of gas filling is previously known, the novel design of the solar panel 1 facilitates such gas filling and thus provides for reducing the cost therefore.

Screen printing is arranged at a side of the radiation transparent front cover 6 facing the self-supporting panel 2 such that it, at least partially, covers the rim 3. This screen printing should cover glued areas as well as the parts of the metal foil 9 covered inside of the box 2 which are not covered by the absorber unit 8. In addition to providing an agreeable appearance to the solar panel 1 this screen printing has the technical effect of providing UV protection for the glue used to affix the radiation transparent front cover 6 to the self-supporting panel 2. The screen printing also contributes to the thermal performance of the solar panel 1.

In accordance with the present invention is also envisaged a glazing system, which comprises one or more solar panels as described above.

Modifications to embodiments of the invention described in the foregoing are possible without departing from the scope of the invention as defined by the accompanying claims.

Expressions such as "including", "comprising", "incorporating", "consisting of', "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A solar panel (1) for glazing systems, comprising:
a self-supporting panel (2), compression moulded from at least one thermally insulating fibre material and a thermosetting binding agent to form an open-top box (2) having a highly compressed rigid rim (3) and less so compressed thermally insulating side walls (4) and bottom (5);
a radiation transparent front cover (6) connected to the self-supporting panel (2) at the rim (3) sealingly enclosing the box (2); and
an absorber unit (8) arranged in the enclosed box, between the radiation transparent front cover (6) and the thermally insulating side walls (4) and bottom (5),
**characterised in that** the absorber unit (8) comprises
an aluminium plate (8a) with a metallically joined copper tube (8b) for conveying a heat transfer liquid;
and **in that** the solar panel (1) further comprises
a metal foil (9) covering the rim (3), inside of walls (4) and bottom (5) of the box (2), and
**in that** the radiation transparent front cover (6) projects outwardly of the rim (3) facilitating attachment of the solar panel (1) to a standard glazing system, and
**in that** absorber plate (8a) has a slanting circumferential edging (8c).

2. The solar panel (1) according to claim 1, **characterised in that** the radiation transparent front cover (6) is glued to the self-supporting panel (2) at the rim (3) such that the box (2) is sealed essentially gas-tight.

3. The solar panel (1) according to claim 2, **characterised in that** the box (2) is filled with a gas having lower thermal conductivity than air.

4. The solar panel (1) according to any one of claims 1 to 43 **characterised in that** screen printing is arranged at a side of the transparent front cover (6) facing the self-supporting panel (2) at least partially covering the rim (3).

5. A glazing system, **characterised in that** it comprises at least one solar panel (1) according to any one of the preceding claims.

## Patentansprüche

1. Solarmodul (1) für Verglasungssysteme, das umfasst:
ein selbsttragendes Modul (2), das aus mindestens einem thermisch isolierenden Fasermaterial und einem wärmehärtenden Bindemittel formgepresst ist, um ein oben offenes Gehäuse (2) mit einem hochkomprimierten starren Rand (3) und weniger komprimierten thermisch isolierenden Seitenwänden (4) und einer Unterseite (5) auszubilden;
eine strahlungsdurchlässige Frontabdeckung (6), die mit dem selbsttragenden Modul (2) an dem Rand (3) verbunden ist, wobei das Gehäuse (2) abdichtend eingeschlossen wird; und
eine Absorbereinheit (8), die in dem abgeschlossenen Gehäuse zwischen der strahlungsdurchlässigen Frontabdeckung (6) und den thermisch isolierenden Seitenwänden (4) und der Unterseite (5) angeordnet ist,
**dadurch gekennzeichnet, dass** die Absorbereinheit (8) eine Aluminiumplatte (8a) mit einem metallisch verbundenen Kupferrohr (8b) zum Fördern einer Wärmeaustauschflüssigkeit umfasst;
und dadurch, dass das Solarmodul (1) weiterhin umfasst:
eine Metallfolie (9), welche den Rand (3) innerhalb von Wänden (4) und Unterseite (5) des Gehäuses (2) abdeckt, und
dadurch, dass die strahlungsdurchlässige Frontabdeckung (6) von dem Rand (3) nach außen hervorsteht, wodurch Anbringen des Solarmoduls (1) an ein Standardverglasungssystem gefördert wird, und dadurch, dass die Absorberplatte (8a) eine geneigte Umfangskante (8c) hat.

2. Solarmodul (1) gemäß Anspruch 1, **dadurch gekennzeichnet, dass** die strahlungsdurchlässige Frontabdeckung (6) an das selbsttragende Modul (2) an dem Rand (3) festgeklebt ist, sodass das Gehäuse (2) im Wesentlichen gasdicht abgedichtet ist.

3. Solarmodul (1) gemäß Anspruch 2, **dadurch gekennzeichnet, dass** das Gehäuse (2) mit einem Gas befüllt ist, das eine geringere Wärmeleitfähigkeit als Luft hat.

4. Solarmodul (1) gemäß einem der Ansprüche 1-3, **dadurch gekennzeichnet, dass** an einer Seite der durchlässigen Frontabdeckung (6), die dem selbsttragenden Modul (2), welches zumindest teilweise den Rand (3) abdeckt, zugewendet ist, Filmdruck angebracht ist.

5. Verglasungssystem, **dadurch gekennzeichnet, dass** es mindestens ein Solarmodul (1) gemäß einem der voranstehenden Ansprüche umfasst.

## Revendications

1. Panneau solaire (1) pour systèmes de vitrage, comprenant :
un panneau autoporteur (2), moulé par compression à partir d'au moins un matériau fibreux thermiquement isolant et d'un liant thermodurcissable, pour former un caisson (2) ouvert au sommet, comportant un rebord rigide (3) fortement comprimé, et des parois latérales (4) et un fond (5) thermiquement isolants et moins fortement comprimés ;
un couvercle frontal (6) transparent aux rayonnements, relié au panneau autoporteur (2) au niveau du rebord (3) en obturant le caisson (2) de manière étanche ; et
une unité d'absorption (8) logée dans le caisson obturé, entre le couvercle frontal (6) transparent aux rayonnements, et les parois latérales (4) et le fond (5) thermiquement isolants,
**caractérisé par le fait que** l'unité d'absorption (8) comprend
une plaque d'aluminium (8a) associée à une tubulure en cuivre (8b) à jonction métallique, dédiée au convoyage d'un liquide de transfert de chaleur ;
et **par le fait que** ledit panneau solaire (1) comprend, en outre,
une feuille métallique (9) recouvrant le rebord (3) à l'intérieur des parois (4) et du fond (5) du caisson (2), et
**par le fait que** le couvercle frontal (6) transparent aux rayonnements fait extérieurement saillie au-delà du rebord (3), favorisant ainsi une liaison du panneau solaire (1) avec un système de vitrage standard, et
**par le fait que** la plaque absorbante (8a) présente une arête périphérique inclinée (8c).

2. Panneau solaire (1) selon la revendication 1, **caractérisé par le fait que** le couvercle frontal (6) transparent aux rayonnements est collé au panneau autoporteur (2) au niveau du rebord (3), de sorte que le caisson (2) est obturé pour l'essentiel avec étanchéité aux gaz.

3. Panneau solaire (1) selon la revendication 2, **caractérisé par le fait que** le caisson (2) est empli d'un gaz présentant une conductivité thermique inférieure à celle de l'air.

4. Panneau solaire (1) selon l'une quelconque des revendications 1 à 3, **caractérisé par le fait qu'**une impression sérigraphique est disposée sur un côté du couvercle frontal transparent (6) qui fait face au panneau autoporteur (2), en recouvrant au moins partiellement le rebord (3).

5. Système de vitrage, **caractérisé par le fait qu'**il comprend au moins un panneau solaire (1) conforme à l'une quelconque des revendications précédentes.
